Europäisches Patentamt

European Patent Office

Office européen des brevets

(11) Veröffentlichungsnummer: **0 001 430**
A1

(12) **EUROPÄISCHE PATENTANMELDUNG**

(21) Anmeldenummer: **78100998.0**

(51) Int. Cl.²: **G 09 B 17/02, B 42 D 9/00**

(22) Anmeldetag: **27.09.78**

(30) Priorität: **05.10.77 DE 7730746 U**

(71) Anmelder: **Scheible, Deborah, Reutstrasse 18, D-7131 Wurmberg (DE)**

(43) Veröffentlichungstag der Anmeldung: **18.04.79 Patentblatt 79/8**

(72) Erfinder: **Scheible, Hanni, Reutstrasse 18, D-7131 Wurmberg (DE)**

(74) Vertreter: **Bunke, Max, Dipl.-Ing. et al, Postfach 1186 Lessingstrasse 9, D-7000 Stuttgart 1 (DE)**

(84) Benannte Vertragsstaaten: **BE CH FR GB LU NL**

(54) **Linienzeigegerät.**

㊼ Das Gerät soll besonders Schulanfängern, die im Lesen und Schreiben noch ungeübt sind, als Linienzeigegerät das Auffinden und Wiederfinden der richtigen Zeile oder Linie, aus der gelesen oder abgeschrieben wird, erleichtern, also als Abschreibe- und Lesehilfe dienen. Im Gegensatz zu bekannten, an festen Arbeitsplätzen anzubringenden Konzepthaltern ist das Gerät leicht transportabel; es weist eine für das Anklammern an einen Rand eines Heftes, Buches, Buchdeckels oder sonstigen Linien- oder Zeilenträgers geeignete federnde Klammer (1) auf, und diese Klammer (1) ist als tragender Teil für einen an der Klammer beweglichen, vorzugsweise auf und ab verschiebbaren Zeigerträger (9) ausgebildet, an dem wiederum ein Linienzeiger (10) in verschiedene Winkellagen verstellbar, vorzugsweise verrastbar, gelagert ist.

– 1 –

Anmelderin:

Fräulein
Deborah Scheible
Reuthstr. 18
7131 Wurmberg
Bundesrepublik Deutschland

Vertreter:

Patentanwälte
Dipl.-Ing. Max Bunke
Dipl.-Chem. Dr. Holger Bunke
Lessingstr.9
7000 Stuttgart 1
Bundesrepublik Deutschland

Stuttgert, den26.September 1978

P 2528 Euro

## Linienzeigegerät

Die Erfindung betrifft ein Linienzeigegerät mit einem längs einer rechtwinklig zu den Linien verlaufenden Führung von Linie zu Lin: verschiebbaren, parallel zu den Linien verlaufenden und federnd auf ein die Linien aufweisendes Blatt (Linienträger) aufgedrückter Linienzeiger, insbesondere zur Verwendung als Abschreib- und Lese hilfe für Schulanfänger.

Es ist bekannt, Konzepthalter mit Linienzeigern auszurüsten, die an Führungen auf- und abschiebbar sind. Die Führung ist dabei an einer in vielfältiger Weise einstellbar gehaltenen Konzepthalteplatte angebracht, die mit einem stativartigen Gestell verbunden ist, das auf einem Schreibmaschinentisch aufgestellt oder an ihn angeklemmt werden kann. Im Gebrauch sind die Geräte ortsfest. Demgemäß wird das Konzept, wie schon der Name Konzepthalter sagt, z.B. ein Stenoblock, mit der Halteplatte des Konzepthalters verbunden oder wie auf einem Notenständer an ihr aufgestellt. Ähnliche Konzepthalter findet man z.B. auch an der Vorderplatte von Fernschreiberverkleidungen.

Der Erfindung liegt die Aufgabe zugrunde, als Abschreib- und Lesehilfe, insbesondere für Schulanfänger, ein Linienzeigegerät zu schaffen, das im Gegensatz zu den als ortsfest anzusehenden, an einen bestimmten Arbeitsplatz gebundenen Konzepthaltern leicht mitgenommen und an verschiedenen Arbeitsplätzen in der Schule und zu Hause in Verbindung mit Schulheften, Schulbüchern und dgl. benutzbar sein soll, was nicht ausschließt, daß es auch in Verbindung mit anderen Linienträgern, z.B. Tabellentafeln, benutzbar sein soll und was ferner nicht ausschließt, daß es auch in Verbindung mit solchen Linienträgern benutzbar ist, bei denen die Linien unter einer bestimmten Neigung zur Begrenzungskante des Linienträgers verlaufen. Entsprechend der Bestimmung vorwiegend für Schulanfänger soll das Gerät leicht an Gewicht und billig herstellbar sowie derart zusammenlegbar sein, daß es in einer Büchertasche leicht mitgenommen werden kann. Es soll dabei aber ohne besondere Aufstellmaßnahmen schnell in Benutzung genommen werden können.

Die Lösung dieser Aufgabe besteht gemäß der Erfindung darin, daß das Gerät als leicht transportierbare Einheit ausgebildet ist, und zwar dadurch, daß eine für das Anklemmen des Gerätes an einen Rand eines Heftes, Buches, Buchdeckels oder sonstigen Linienträgers geeignete federnde Klammer als tragender Teil der übrigen Geräteelemente verwendet ist.

Bei einer Ausführungsform sind die Klammerschenkel scharnierartig um eine Achse schwenkbar und etwa so lang, wie die Linienträger, an denen das Gerät verwendet werden soll, mindestens hoch sind, wobei die Schenkel an ihrer dem Linienträger abgewendeten Seite Griffansätze aufweisen, und wobei eine Feder so angeordnet ist, daß sie bestrebt ist, die Schenkel auf der Seite der Griffansätze voneinander zu entfernen und ihre dem Linienträger zugewendeten, diesen bei der Benutzung des Gerätes einklemmenden Enden auf der
anderen Seite der Achse einander zu nähern, und wobei das obere
Klemmende ein Führungsprofil für einen Zeigerträger eines Linienzeigers trägt.

Eine Weiterbildung liegt ferner darin, daß die Feder ein zwischen
Ausnehmungen der Klammerschenkel eingeklemmter gummielastischer
Streifen ist; im Gegensatz zur Verwendung metallischer Federn erweist sich diese Ausbildung als für die Verwendung in Kinderhänder
besonders vorteilhaft.

Das Führungsprofil ist im Querschnitt zweckmäßig schwalbenschwanzförmig und das Ende des darauf geführten Zeigerträgers ist auf
dieses Profil aufgerastet, zu welchem Zweck sowohl das Führungsprofil als auch der Zeigerträger aus die für das Aufrasten (Aufknöpfen) notwendige Elastizität aufweisendem Material, vorzugsweise Kunststoff bestehen. Dabei ist das Führungsprofil zweckmäßig
mit dem oberliegenden Klammerschenkel aus einem Stück ausgeführt.
Es ist vorteilhaft, auch den Zeigerträger und den Linienzeiger
ebenso wie beide Klammerschenkel als Formstücke aus Kunststoff
auszubilden, weil sich die Kunststoffoberfläche im Gebrauch leicht
sauber halten läßt und die Ausführung der Teile aus Kunststoff
der billigen Herstellung und einer in Gestalt des Zusammenrastens
schnellen und billigen Montage zugute kommt.

Eine Weiterbildung von besonderer Bedeutung liegt darin, daß der
Linienzeiger an seinem Träger derart schwenkbar angeordnet ist,
daß er an die Klammerkante oder an die von dieser getragene oder
gebildete Führung herangeklappt werden kann. Dies gewährleistet
die leichte und raumsparende Unterbringung beim Mitnehmen z.B. in
Büchertaschen, aber auch die raumsparende Verpackung im Verkauf.
Die Verwendung von Kunststoff erleichtert es, dabei die Reibung
im Schwenkgelenk so einzurichten, daß einerseits das Verschwenken
leicht möglich ist und andererseits ein eine unbeabsichtigte Zeigerverstellung hervorrufendes zu großes Spiel ausgeschlossen ist.

Eine Weiterbildung dieser Bauart liegt schließlich darin, daß an
dem Zeigerträger und dem Linienzeiger Rasten und dazu passende Rastbuckel angebracht sind, die ein Einstellen des Linienzeigers in verschiedene Winkellagen zur Führung des Zeigerträgers ermöglichen, insbesondere auch das Heranklappen des Zeigers an das Klemmende des obenliegenden Klammerschenkels.

Besonders bei der Verwendung in der Hand von Schulanfängern ist es nützlich, mindestens den Linienzeiger als Träger einer Zahlenreihe und des Alphabets, gegebenenfalls in mehreren verschiedenen Schriftarten, insbesondere Schreib- und Blockschrift zu benutzen.

Beim Lesen und Abschreiben haben Schulanfänger Mühe, die Zeile beizubehalten, so daß sie unter Zeitaufwand jeweils das nächste Wort oder die richtige Zeile suchen müssen; hier schafft das neue Gerät Abhilfe. Mittels seiner gut anfaßbaren Klammer läßt es sich leicht an einem Rand eines Schulheftes oder eines Schulbuches befestigen. Schulbücher sind im allgemeinen nicht so dick, als daß sie von einer immer noch handlichen Klammer nicht im ganzen erfaßt werden könnten. Wenn im Ausnahmefall dickere Schulbücher verwendet werden, die an der aufgeschlagenen Stelle nicht mehr in voller Dicke erfaßt werden können, genügt es, die zu lesende Seite mit einem Stoß der nachfolgenden Seiten zum Anklammern zu verwenden. Zum Gebrauch in Verbindung mit Linienträgern mit waagerecht verlaufenden Zeilen, wie in der Schule, wird der Linienzeiger waagerecht ausgeschwenkt, wobei er dann nach Bedarf von Zeile zu Zeile nach oben oder nach unten verschoben werden kann. Nach Gebrauch wird er ganz nach unten geschoben und hochgeklappt, so daß er an der Klammer- oder Führungskante anliegt. Statt in die unterste Stellung, kann er auch in die oberste geschoben und dann nach unten geklappt werden.

Die Zeichnung zeigt ein Ausführungsbeispiel.

Fig. 1 zeigt eine Draufsicht auf ein gemäß der Erfindung ausgebildetes Linienzeigegerät,

Fig. 2 eine Stirnansicht in kleinerem und

Fig. 3 einen Teilschnitt nach Linie A-B in vergrößertem Maßstabe.

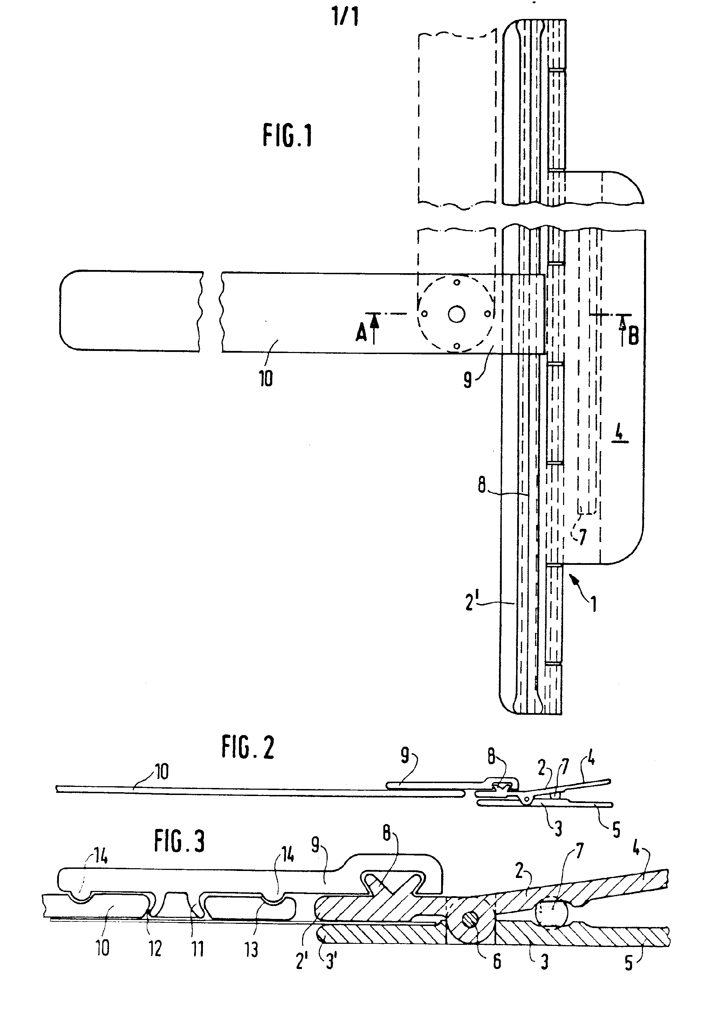

Tragender Teil ist die Klammer 1 , die einen obenliegenden Schenkel 2 und einen unten liegenden Schenkel 3 aufweist. Der obenliegende Schenkel trägt einen Griffansatz 4 und der untenliegende Schenkel einen Griffansatz 5. Die Schenkel sind scharnie: artig um eine z.B. durch einen Stahldraht gebildete Achse 6 schwenkbar. Auf der Seite der Griffansätze ist in Aussparungen der Schenkel ein als Feder wirkender Streifen 7 aus gummielastischem Material eingeklemmt. Mittels der auf der den Griffansätzen 4, 5 entgegengesetzten Seite liegenden Klemmenden 2', 3' der Schenkel ist das Gerät auf einen Linienträger aufklemmbar; die Klemmenden werden unter der Wirkung der Feder 7 gegeneinander ode: gegen den zwischen sie gebrachten Linienträger gedrückt. Auf der Oberseite des Klemmteiles 2' des Schenkels 2 ist mit diesem aus einem Stück bestehend die im Querschnitt schwalbenschwanzförmige Führung 8 ausgebildet, die sich in Längsrichtung der Klammerkantei erstreckt. Auf diese Führung ist ein Zeigerträger 9 aufgerastet (aufgeknöpft), der ebenso wie der Schenkel 2 und die Führung aus Kunststoff besteht, dessen Elastizität das Aufrasten oder Aufknöpfen zuläßt. Bezogen auf Fig.1 kann der Zeigerträger 9 auf der Führung 8 leicht, aber durch Reibung in der jeweiligen Stellung gehalten, auf- und abgeschoben werden. Auf seiner Unterseite weis: der Zeigerträger 9 eine als Drehlager für einen Linienzeiger 10 benutzte Nabe 11 auf, die ebenfalls im wesentlichen schwalbenschwanzförmigen Querschnitt hat und auf welche der Linienzeiger 1( mit einer Ausnehmung 12 wieder aufgerastet oder aufgeknöpft ist, so daß er leicht beweglich, aber in der jeweiligen Lage durch Reibung gehalten ist. Bei dem gezeichneten Beispiel sind in der Oberseite des Linienzeigers auf einem Kreise liegende Rasten 13 angebracht, in welche auf der Unterseite des Zeigerträgers 9 angeordnete Rastbuckel 14 passen. Wie Fig.1 zeigt, liegen hier jeweil: zwei Rasten 13 auf einer waagerechten und auf einer dazu senkrech· Achse jeweils einander diametral gegenüber, so daß der Eingriff der Rastbuckel in die Rasten die waagerechte und die in Fig.1 ein- gestrichelte, senkrecht dazu verlaufende hochgeklappte Stellung des Linienzeigers 10 bestimmt. Die Anordnung läßt sich leicht dahin abwandeln, daß auch Rasten angeordnet werden, die um weniger als 90° voneinander entfernt sind, so daß bestimmte Winkellagen des Linienzeigers leicht und sicher eingestellt werden können, wi

es für das Arbeiten mit Linienträgern, auf denen die Linien geneigt zu der Kante des Linienträgers verlaufen, zweckmäßig sein kann.

0001430

P a t e n t a n s p r ü c h e

1. Linienanzeigegerät mit einem längs einer rechtwinklig zu den Linien verlaufenden Führung von Linie zu Linie verschiebbaren, parallel zu den Linien verlaufenden und federnd auf ein die Linien aufweisendes Blatt (Linienträger) aufgedrückten Linienzeiger, insbesondere zur Verwendung als Lesehilfe für Schulanfänger, dadurch gekennzeichnet, daß das Gerät als leicht transportierbare Einheit ausgebildet ist, und zwar dadurch, daß eine für das Anklemmen des Gerätes an einen Rand eines Heftes, Buches, Buchdeckels oder sonstigen Linienträgers geeignete federnde Klammer (1) als tragender Teil der übrigen Geräteelemente (8 bis 10) verwendet ist.

2. Gerät nach Anspruch 1, dadurch gekennzeichnet, daß die Klammerschenkel (2, 3) scharnierartig um eine Achse (6) schwenkbar und etwa so lang sind, wie die Linienträger, an denen das Gerät verwendet werden soll, mindestens hoch sind, wobei die Schenkel (2, 3 an ihrer dem Linienträger abgewendeten Seite Griffansätze (4, 5) aufweisen, und wobei eine Feder (7) so angeordnet ist, daß sie bestrebt ist, die Schenkel (2, 3) auf der Seite der Griffansätze (4, 5) voneinander zu entfernen und ihre dem Linienträger zugewendeten, diesen bei der Benutzung des Gerätes einklemmenden Enden (Klemmenden) (2', 3') auf der anderen Seite der Achse (6) einander zu nähern, und wobei das obere Klemmende (2') ein Führungsprofil (8) für einen Zeigerträger (9) eines Linienzeigers (10) trägt.

3. Gerät nach Anspruch 1 und 2, dadurch gekennzeichnet, daß die Feder ein zwischen Ausnehmungen der Klammerschenkel (2, 3) eingeklemmter gummielastischer Streifen (7) ist.

4. Gerät nach Anspruch 1 und 2 oder 3, dadurch gekennzeichnet, daß das Führungsprofil (8) im Querschnitt schwalbenschwanzförmig ist und das Ende des darauf geführten Zeigerträgers (9) auf dieses Profil (8) aufgerastet ist, zu welchem Zweck sowohl das Führungsprofil (8) als auch der Zeigerträger (9) aus die für das Aufrasten (Aufknöpfen) notwendige Elastizität aufweisendem Material, vorzugsweise Kunststoff, bestehen.

5. Gerät nach Anspruch 4, dadurch gekennzeichnet, daß das Führungsprofil (8) und der obenliegende Klammerschenkel (2) miteinander
aus einem Stück bestehen.

6. Gerät nach Anspruch 4 und 5, dadurch gekennzeichnet, daß beide Klammerschenkel (2, 3), der Zeigerträger (9) und der Linienzeiger (10) aus Kunststoff bestehende Formstücke sind.

7. Gerät nach Anspruch 4 bis 6, dadurch gekennzeichnet, daß der
Zeigerträger (10) auf einer Seite, vorzugsweise auf der Unterseite,
eine im Querschnitt schwalbenschwanzförmige Nabe (11) aufweist,
auf welche der Linienzeiger (10) mit einer Ausnehmung (12) drehbar aufgeknöpft ist.

8. Gerät nach Anspruch 1 und 2 oder einem der folgenden, dadurch
gekennzeichnet, daß an dem Zeigerträger (9) und dem Linienzeiger
(10) Rasten (13) und dazu passende Rastbuckel (14) angebracht
sind, die ein Einstellen des Linienzeigers (10) in verschiedene
Winkellagen zur Führung (8) des Zeigerträgers (9) ermöglichen,
insbesondere auch das Heranklappen des Zeigers (10) an das Klemmende (2') des obenliegenden Klammerschenkels (2).

9. Gerät nach Anspruch 1 oder einem der folgenden, dadurch gekennzeichnet, daß mindestens der Linienzeiger (10) als Träger einer
Zahlenreihe und des Alphabets, gegebenenfalls in mehreren verschiedenen Schriftarten, insbesondere Schreib- und Blockschrift,
benutzt ist.

0001430

1/1

FIG.1

FIG. 2

FIG.3

Europäisches
Patentamt

**EUROPÄISCHER RECHERCHENBERICHT**

0001430

Nummer der Anmeldung

EP 78 100 998.0

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| — | US – A – 2 181 615 (B.E. VAN ALSTYNE)<br>* Anspruch 1; Spalte 2, Zeilen 29-34 * | 1 |
| — | Abridgments of Specifications Class 16, Period – A.D. 1909-15<br>GB – A – 10 359 /1912 (M.F. EDE) | 1 |
| — | DE – U – 7 144 141 (MARABU)<br>* Fig. 2 * | 7 |
| — | DE – U – 7 046 541 (MARABU)<br>* Anspruch 9 * | 8 |
| A | DE – C – 406 096 (MANDLER) | |
| A | DE – U – 7 220 248 (F.W. KIEFER) | |
| A | US – A – 2 222 864 (B.E. VAN ALSTYNE) | |
| A | US – A – 2 690 748 (E. CRAWFORD) | |
| A | US – A – 2 986 822 (A.R. BALCHUNS) | |

**KLASSIFIKATION DER ANMELDUNG (Int.Cl.²)**

G 09 B  17-02
B 42 D  9-00

**RECHERCHIERTE SACHGEBIETE (Int. Cl.²)**

G 09 B  17-02
G 09 B  17-04
G 09 B  11-00
B 42 D  9-00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 1-12-1978 | FUCHS |

EPA form 1503.1  06.78